# EUROPEAN PATENT APPLICATION

(11) **EP 4 583 531 A1**
(43) Date of publication of application: **09.07.2025**
(21) Application number: 23868509.3
(22) Date of filing: 15.09.2023
(51) Int. Cl.: H04R 1/10, H04R 3/02, H04R 3/00, G06F 18/00, G01P 15/00

(54) **ELECTRONIC DEVICE AND METHOD FOR OUTPUTTING SOUND SIGNAL, AND NON-TRANSITORY STORAGE MEDIUM**

(30) Priority: 19.09.2022 KR 20220118179
(71) Applicant: Samsung Electronics Co., Ltd., Suwon-si, Gyeonggi-do 16677 (KR)
(72) Inventor: PARK, Yongwook, Suwon-si Gyeonggi-do 16677 (KR); JEUNG, Yongbum, Suwon-si Gyeonggi-do 16677 (KR); YU, Sangwoo, Suwon-si Gyeonggi-do 16677 (KR); LEE, Seunga, Suwon-si Gyeonggi-do 16677 (KR); KANG, Lockhee, Suwon-si Gyeonggi-do 16677 (KR); HEO, Changryong, Suwon-si Gyeonggi-do 16677 (KR)
(74) Representative: Gulde & Partner
(86) International application number: PCT/KR2023/013938
(87) International publication number: WO 2024/063456

(57) **Abstract**

The present document relates to an electronic device and a method for outputting a sound signal. According to one embodiment, the electronic device may comprise a first sound output device which include a plurality of microphones and which can be worn at a first position of the body, a second sound output device which include a plurality of microphones and which can be worn at a second position of the body and at least one processor electrically connected to the first sound output device and the second sound output device. According to the one embodiment, the at least one processor can be configured to identify, on the basis of at least one reception signal received through at least one of the plurality of microphones of the first sound output device or at least one of the plurality of microphones of the second sound output device, whether the first sound output device and the second sound output device are normally worn, and induce re-wearing of the first sound output device and the second sound output device in response to the identification of abnormal wearing of the first sound output device and the second sound output device. Other embodiments are possible.

## Description

### [Technical Field]

Various embodiments of the disclosure relate to an electronic device, a method, and a non-transitory storage medium for outputting a sound signal.

### [Background Art]

With the development of digital technology, electronic devices are provided in various forms such as smartphones, tablet personal computers (PCs), and personal digital assistants (PDAs). Electronic devices are developed in a form which can be worn on users to improve portability and user accessibility.

Various services and additional functions provided by the electronic device are gradually expanding and diversifying. In order to increase effective value of the electronic device and satisfy various needs of users, the electronic device is being continuously developed.

With the development of electronic devices in various forms, the electronic devices are connected to external electronic devices in various forms to provide functions or information that cannot be provided by the electronic devices. Further, the electronic device may allow external electronic devices to perform its own functions or receive information various pieces of information through another network.

### [Detailed Description of the Invention]

### [Technical Solution]

Left and right of conventional electronic devices could be identified by checking information (Left or Right) engraved on the housing of a pair of sound output devices (for example, headphones), and methods and services are not provided to identify left/right miswearing of conventional sound output devices.

According to an embodiment of the document, an electronic device and a method for outputting a sound to identify the left/right miswearing of the sound output devices may be provided.

According to an embodiment of the document, an electronic device may include a first sound output device including a plurality of microphones and configured to be wearable on a first location of a body, a second sound output device including a plurality of microphones and configured to be wearable on a second location of the body, and at least one processor electrically connected to the first sound output device and the second sound output device.

According to an embodiment, the at least one processor may be configured to identify whether the first sound output device and the second sound output device are normally worn, based on at least one reception signal received through at least one microphone among the plurality of microphones of the first sound output device or at least one microphone among the plurality of microphones of the second sound output device.

According to an embodiment, the at least one processor may be configured to induce re-wearing the first sound output device and the second sound output device in response to identification of abnormal wearing of the first sound output device and the second sound output device.

According to an embodiment, a method of operating an electronic device may include receiving at least one reception signal through at least one microphone among a plurality of microphones included in a first sound output device of the electronic device or at least one microphones among a plurality of microphones included in a second sound output device of the electronic device.

According to an embodiment, the method of operating the electronic device may include identifying whether the first sound output device and the second sound output device are normally worn based on the at least one reception signal.

According to an embodiment, the method of operating the electronic device may include inducing re-wearing the first sound output device and the second sound output device in response to identification of abnormal wearing of the first sound output device and the second sound output device.

According to an embodiment, a non-transitory storage medium storing a program is provided. The program may include instructions that, when executed by a processor of an electronic device, cause the electronic device to receive at least one reception signal through at least one microphone among a plurality of microphones included in a first sound output device of the electronic device or at least one microphones among a plurality of microphones included in a second sound output device of the electronic device, identify whether the first sound output device and the second sound output device are normally worn based on the at least one reception signal, and induce re-wearing the first sound output device and the second sound output device in response to identification of abnormal wearing of the first sound output device and the second sound output device.

### [Brief Description of Drawings]

FIG. 1 is a block diagram illustrating an electronic device within a network environment according to various embodiments.
FIGS. 2A and 2B are diagrams illustrating configuration examples of the electronic device according to an embodiment.
FIG. 3 is a block diagram illustrating a configuration example of the electronic device according to an embodiment.
FIG. 4 illustrates a configuration example of a plurality of microphones of the electronic device according to an embodiment.
FIG. 5 illustrates an example for identifying abnormal wearing of the electronic device according to an embodiment.
FIGS. 6A and 6B illustrate examples for identifying normal wearing of the electronic device according to an embodiment.
FIG. 7 illustrates an example for identifying normal wearing of the electronic device according to an embodiment.
FIGS. 8A, 8B, and 8C are graphs illustrating reception signals received through a plurality of microphones in the electronic device according to an embodiment.
FIGS. 9A, 9B, and 9C illustrate examples for identifying normal wearing of the electronic device according to an embodiment.
FIG. 10 is a flowchart illustrating a method of operating the electronic device according to an embodiment of the disclosure.

In connection with description of drawings, the same or similar reference numerals may be used for the same or similar elements.

### [Mode for Carrying out the Invention]

Hereinafter, an electronic device according to various embodiments is described with reference to the accompanying drawings. The term user used in various embodiments may be a person using an electronic device or a device (for example, an artificial intelligence electronic device) using an electronic device.

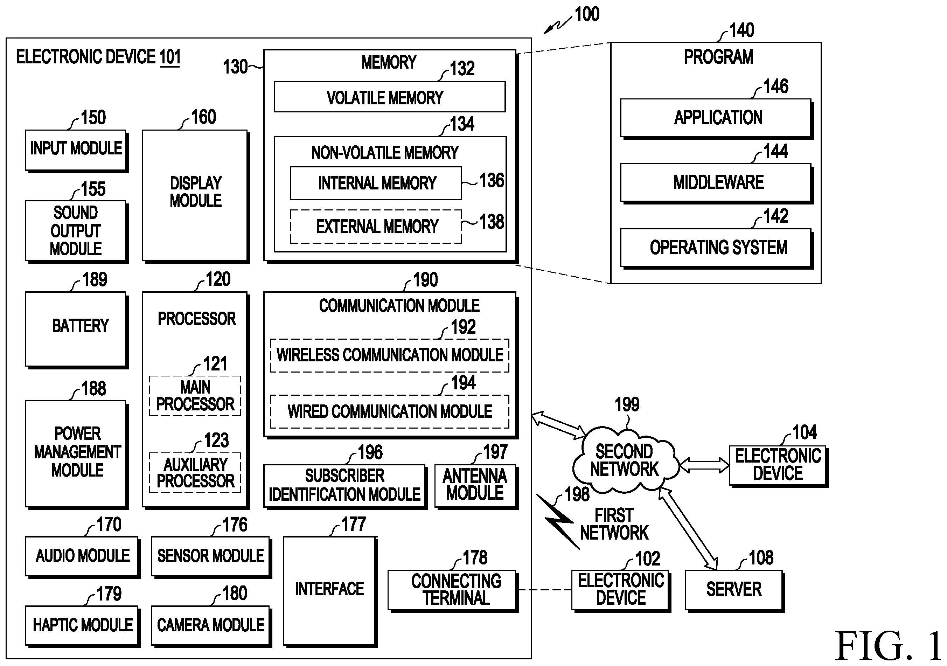

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. **In** some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

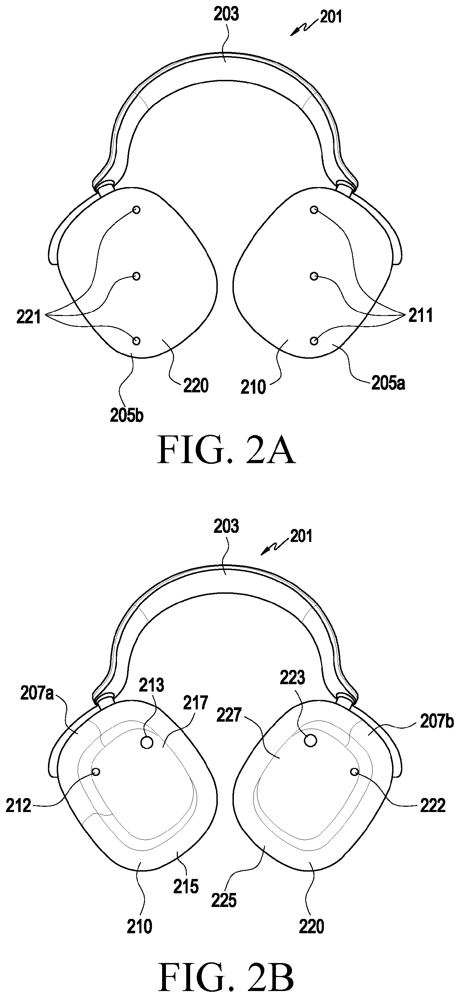

FIGS. 2A and 2B are diagrams illustrating configuration examples of an electronic device according to an embodiment.

Referring to FIGS. 2A and 2B, an electronic device 201 (for example, the electronic device 101 of FIG. 1) according to an embodiment is a wearable-type electronic device which can be worn a user's body and may be worn on a part close to the user's ear. The electronic device 201 may be a sound device (for example, a pair of over-ear headphones, earphones, or headsets) that may output audio data received from an external electronic device (for example, the electronic device 102 or 104 of FIG. 1) in the form of a sound signal. According to an embodiment, the electronic device 201 may be wirelessly connected to the external electronic device. For example, the electronic device 201 may communicate with the external electronic device through a network (for example, a short-range wireless communication network or a long-range wireless communication network). The network is not limited thereto, and may include a mobile or cellular communication network (local area network (LAN) (for example, Bluetooth communication), a wireless local area network (WLAN), a wide area network (WAN), an Internet, or a small area network (SAN). According to an embodiment, the electronic device 201 may be wiredly connected to the external electronic device (for example, the electronic device 102 or 104 of FIG. 1) by using a cable (not shown).

According to an embodiment, the electronic device 201 may include a first sound output device 210 worn on a first location of the body (for example, left ear) and a second sound output device 220 worn on a second location of the body (for example, right ear). According to an embodiment, the electronic device 201 may include a connection member 203 for connecting the first sound output device 210 and the second sound output device 220. The configuration of the electronic device 201 is not limited thereto, and may be configured in various forms. For example, the electronic device 201 may not include the connection member 203, and thus the first sound output device 210 and the second sound output device 220 may be separately configured and may be connected through a wireless communication scheme (for example, short-range wireless communication).

According to an embodiment, in the first sound output device 210, components (for example, at least one speaker and a plurality of microphones) related to sound effects may be arranged to make a user feel a sense of space, based on a shape of the first location of the body and information indicating the first location of the body (for example, L indicating the left) may be engraved on a partial area on the exterior of the housing. In the second sound output device 220, components related to sound effects may be arranged to make the user feel the sense of space, based on a shape of the second location of the body and information indicating the second location of the body (for example, R indicating the right) may be imprinted in a partial area on the exterior of the housing.

According to an embodiment, each of the first sound output device 210 and the second sound output device 220 may include a plurality of microphones. According to an embodiment, the first sound output device 210 may include one or more external microphones 211 (for example three external microphones) among the plurality of microphones toward an outer surface 205a of the housing therein as illustrated in FIG. 2A. As illustrated in FIG. 2A, the second sound output device 220 may include one or more external microphones 221 (for example, three external microphones) among the plurality of microphones toward an outer lateral surface 205b of the housing therein.

According to an embodiment, the first sound output device 210 may include a first inner microphone (inner mic) 212 among the plurality of microphones and a first speaker 213 inside a home 217 toward an inner surface 207a of the housing as illustrated in FIG. 2B. The second sound output device 220 may include a second inner microphone (inner mic) 222 among the plurality of microphones and a second speaker 223 inside the home 227 toward an inner surface 207b of the housing as illustrated in FIG. 2B. The first inner mic 212 and the second inner mic 222 may be arranged at the location close to the inside of the ears wearing the first sound output device 210 and the second sound output device 220.

According to an embodiment, the first sound output device 210 may include a first ear cushion 215 configured in the edge of the inner surface 207a of the housing to prevent outside exposure of a sound signal output through the speaker 213. According to an embodiment, the second sound output device 220 may include a second ear cushion 225 configured in the edge of the inner surface 207b of the housing to prevent outside exposure of a sound signal output through the speaker 223. The first ear cushion 215 and the second ear cushion 225 may be configured to cover the user's ears on the home 217 and 227 when the first sound output device 210 and the second sound output device 220 are worn.

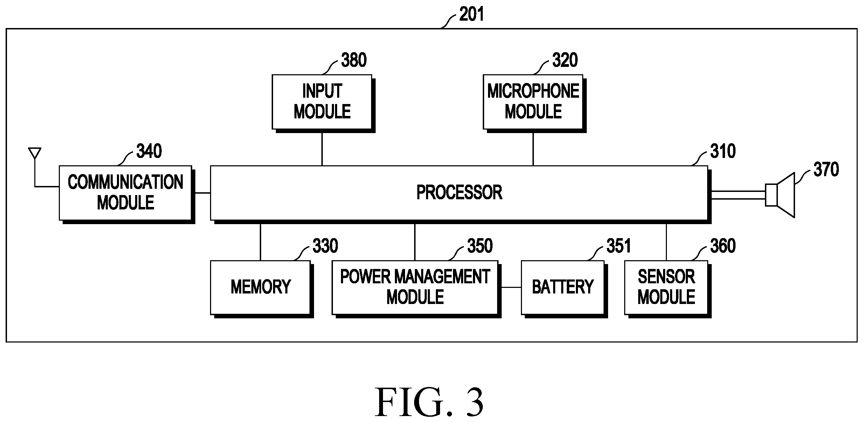

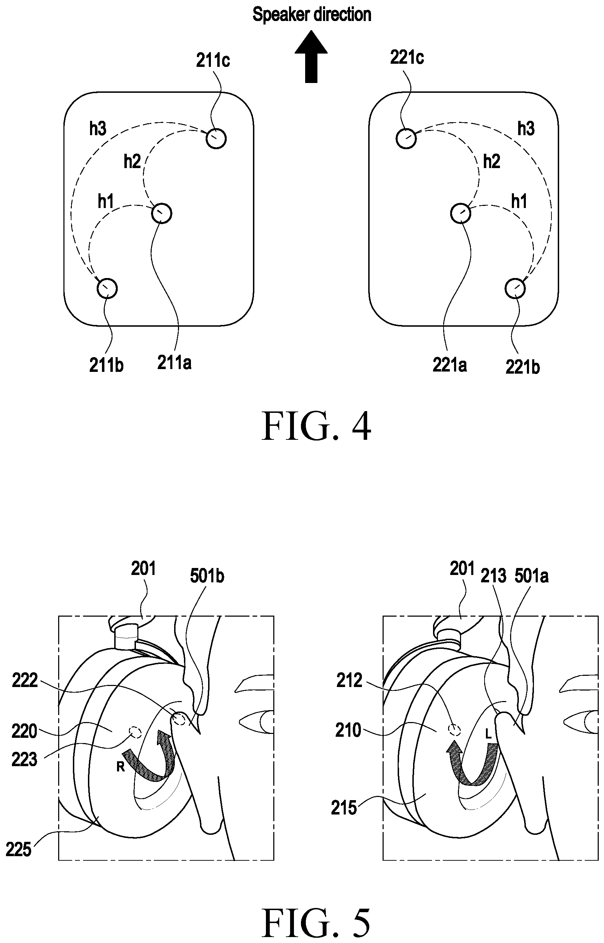

FIG. 3 is a block diagram illustrating a configuration example of the electronic device according to an embodiment, and FIG. 4 is a diagram illustrating a configuration example of a plurality of microphones of the electronic device according to an embodiment.

Referring to FIG. 3, the electronic device 201 (for example, the electronic device 101 of FIG. 1) according to an embodiment may include a processor 310 (for example, the processor 120 of FIG. 1), a microphone module 320 (for example, the input module 150 of FIG. 1), memory 330 (for example, the memory 130 of FIG. 1), a power management circuit 350 (for example, the power management module 188 of FIG. 1), a battery 351 (for example, the battery 189 of FIG. 1), a communication module 340 (for example, the communication module 190 of FIG. 1), a sensor module 360 (for example, the sensor module 176 of FIG. 1) including at least one sensor, a speaker 370 (for example, the sound output module 155 of FIG. 1), and/or an input module 380 (for example, the input module 150 of FIG. 1). According to an embodiment, the electronic device 210 may include elements as illustrated in FIG. 3 in each of the first sound output device 210 and the second sound output device 220. The electronic device 201 is not limited thereto, and may include some elements (for example, the processor or the memory) in one of the connection member 203, the first sound output device 210, or the second sound output device 220 to commonly connect the elements to the first sound output device 210 and the second sound output device 220.

According to an embodiment, the processor 310 may be electrically or operatively connected to the power management circuit 320, the battery 321, the memory 330, the communication module 340, at least one microphone 350, the sensor module 360 including at least one sensor, the speaker 370, and/or the input circuit 380, and may perform the overall control operation of the electronic device 201. According to an embodiment, the processor 310 may include a voice-processing circuit, and may process audio data received from the second external electronic device 101 through the voice-processing circuit and perform control to output a sound signal (for example, an audio signal).

According to an embodiment, the processor 310 may control the first sound output device 210 and the second sound output device 220 to receive reception signals through the plurality of microphones 211, 212, 221, and 222. The reception signals may include a signal obtained by receiving a sound signal output from the external electronic device or a user's voice signal and a signal (for example, an echo signal) obtained by receiving a sound signal output through the speakers 213 and 223 through the inner mics 212 and 222. According to an embodiment, the processor 310 may control the first sound output signal 210 and the second sound output device 220 to output the reception signals through the speakers 213 and 223.

According to an embodiment, the processor 310 may identify whether the first sound output device 210 and the second sound output device 220 are normally or abnormally worn, based on at least one reception signal received through at least one mic among the plurality of mics 211 and 212 of the first sound output device 210 and the plurality of mics 221 and 222 of the second sound output device 220. According to an embodiment, the processor 310 may provide information for inducing re-wearing the first sound output device 210 and the second sound output device 220 in response to the identification of abnormal wearing of the first sound output device 210 and the second sound output device 220. For example, the processor 310 may transmit the information for inducing re-wearing to the external electronic device through wireless communication to display the information through a display of the external electronic device (for example, the external electronic device 102 or 104 of FIG. 1) carried by the user. For example, the processor 310 may output the information for inducing re-wearing in the form of a voice signal through the speakers 213 and 223 or in the form of a light through a light emitting device (for example, a light emitting diode) formed in a partial area of the housing (for example, an area that the user can check).

According to an embodiment, in response to the identification of abnormal wearing of the first sound output device 210 and the second sound output device 220, the processor 310 may invert a sound signal for reception signals and control the first sound output device 210 to output the inverted sound signal through the speaker 213, and invert a sound signal for reception signals and control the second sound output device 210 to output the inverted sound signal through the speaker 223. According to an embodiment, the processor 310 may provide the information for inducing re-wearing and, after a specified time passes, identify whether the first sound output device 210 and the second sound output device 220 are put on again. When it is identified that the first sound output device 210 and the second sound output device 220 are not put on again, the processor 310 may invert the sound signal and control each of the first sound output device 210 and the second sound output device 220 to output the inverted sound signal.

According to an embodiment, in response to the identification of normal wearing of the first sound output device 210 and the second sound output device 220, the processor 310 may control the first sound output device 210 to output the sound signal for reception signals through the speaker 213 and control the second sound output device 220 to output the sound signal (for example, a normal sound signal) for reception signals through the speaker 223.

According to an embodiment, the processor 310 may control the battery 321 that provides power to operate the electronic device 201. The processor 310 may manage charging and discharging of the battery 321 through the power management circuit 320.

According to an embodiment, the processor 310 may be configured to be included in each of the first sound output device 210 and the second sound output device 220 or may be formed in one of partial areas of the electronic device 201 (for example, a connection member, the first sound output device 210, or the second sound output device 220) to commonly control the first sound output device 210 and the second sound output device 220.

According to an embodiment, the microphone module 320 may be included each of the first sound output device 210 and the second sound output device 220. The microphone module 320 of the first sound output device 210 may include at least one external mic 211 and the inner mic 212. The microphone module 320 of the second sound output device 220 may include at least one mic 221 and the inner mic 222. At least one inner mic (for example, inner mic) among the plurality of mics may be arranged at the location close to the inside of the ear, and one or more external mics may be arranged outside the ear while the electronic device 201 is worn on the user's ears. The microphone module 320 may be turned on (for example, activation or operation) or turned off (for example, deactivation or non-operation) by the control of the processor 310.

According to an embodiment, the first inner mic 212 included in the first sound output device 210 may be arranged at the location hidden by a part (for example, a helix 501a of FIG. 5) of the user's ear (for example, a first location indicating the left ear), and the second inner mic 222 included in the second sound output device 220 may be arranged at the location hidden by a part (for example, a helix 501b of FIG. 5) of the user's ear (for example, a second location indicating the right ear).

According to an embodiment, as shown in FIG. 2A, when the number of the external mics 211 included in the first sound output device 210 and the external mics 221 included in the second sound output device 220 is plural, the plurality of external mics 211 and the plurality of external mics 221 may be arranged at the outer surfaces 205a and 205b to be symmetrical to each other. According to an embodiment, as shown in FIGS. 2A and 4, the plurality of mics 211 is three, the first mic 211a of the plurality of external mics 211 may be arranged at the center and the second mic 211b, and the third mic 211c of the plurality of external mics 211 may be arranged to be separated at equal intervals from each other in different directions from the first mic 211a by regular distances h1 and h2. The first mic 211a, the second mic 211b, and the third mic 211c may be arranged in a straight line with a specified slop. According to an embodiment, as shown in FIGS. 2A and 4, the plurality of mics 221 is three, the first mic 221a of the plurality of external mics 221 may be arranged at the center and the second mic 221b, and the third mic 221c of the plurality of external mics 221 may be arranged to be separated at equal intervals from each other in different directions from the first mic 221a by regular distances h1 and h2. The first mic 221a, the second mic 221b, and the third mic 221c may be arranged in a straight line with a specified slop. For example, when a ratio between the mics is changed (for example, h1>h2 or h1<h2), it may be identified whether the electronic device is normally worn by applying weights to some of the reception signals received by the mics. The disclosure is not limited thereto, and the plurality of mics 211 and the plurality of mics 221 may include two mics, four mics, or more mics and may be configured to be symmetrical with each other.

According to an embodiment, the third mic 211c included in the first sound output device 210 may be arranged at the location farther from the user's ear (for example, the first location indicating the left ear) in a speaker direction from the upper area of the outer surface 205a based on the central location, and the third mic 221c included in the second sound output device 220 may be arranged at the location farther from the user's ear (for example, the second location indicating the right ear) in the speaker direction from the upper area of the outer surface 205b based on the central location. According to an embodiment, the second mic 211b included in the first sound output device 210 may be arranged at the location closer to the user's ear (for example, the first location indicating the left ear) in the speaker direction from the lower area of the outer surface 205a based on the central location, and the second mic 221b included in the second sound output device 210 may be arranged at the location closer to the user's ear (for example, the second location indicating the right ear) in the speaker direction from the lower area of the outer surface 205b based on the central location.

According to an embodiment, the memory 330 may store various pieces of data and/or information used by at least one element of the electronic device 201 (for example, the microphone module 320, the communication circuit 340, the power management circuit 350, the battery 351, the sensor module 360 including at least one sensor, the speaker 370, and/or the input module 380). The data may include, for example, software (for example, program) and input data or output data for a command related thereto. For example, the memory 330 may store instructions for performing the operation of the electronic device 201 (or the processor 310). According to an embodiment, the memory 330 may store information related to the output of a sound signal. The memory 330 may store a reference signal strength and a reference reception time indicating the signal strength and the reception time of the reception signal during normal wearing. The memory 330 may store information received from the external electronic device (for example, information related to the location where an external wearable device is worn).

According to an embodiment, the electronic device 201 may provide a user interface about a function for receiving audio data from the second external electronic device 101 or a function for transmitting audio data to the second external electronic device 101. For example, the user interface may include a light-emitting means such as a light emitting diode (LED). For example, the light-emitting means may be controlled to emit a color for normal wearing or abnormal wearing. For example, when the electronic device 201 is abnormally worn, the light-emitting means may be controlled to emit a specific color for inducing normal wearing.

According to an embodiment, the power management module 350 may efficiently manage and optimize the use of power of the battery 351 within the electronic device 201. According to an embodiment, the power management module 350 may adjust power supplied to the processor 310 or adjust power provided to respective elements (for example, the memory, the communication module, the input module, and/or the sensor) other than the processor 310, based on a signal provided from the processor 310 according to load to be processed. According to an embodiment, the power management module 320 may include a battery charging module. According to an embodiment, the power management module 320 may wiredly or wirelessly receive power from an external power supply device to charge the battery 321.

The sensor module 360 according to an embodiment may include at least one sensor for measuring or detecting a change in a surrounding environment (for example, vibration, motion, and/or sounds). According to an embodiment, the sensor circuit 360 may include a voice pick up (VPU) sensor. For example, the VPU sensor may include a multi-axis acceleration sensor (for example, a 3-axis acceleration sensor, a 6-axis acceleration sensor, or another multi-axis acceleration sensor) and may detect a signal (for example, a vibration signal, a motion signal, or a sound signal) transmitted through at least a user's body part for each axis). According to an embodiment, the multi-axis acceleration sensor may detect motion of the electronic device 201 (for example, movement direction) generated according to the user's motion to wear the electronic device 201. For example, when voice is spoken by the user, vibration of the user's vocal cords is detected by the multi-axis acceleration sensor and thus may be acquired as signals of at least some of a plurality of sounds related to voice signals. The technical idea of the disclosure may not be limited thereto, and may further include other sensors related to audio signal processing.

According to an embodiment, the speaker 370 may output a sound signal (for example, an audio signal), based on the control of the processor 310. The speaker 370 may include the first speaker 213 arranged on an inner surface 207a of the housing of the first sound output device 210 and the second speaker 223 arranged on an inner surface 207b of the housing of the second sound output device 220.

The input module 380 according to an embodiment may be configured to generate various input signals required for operating (or controlling the operation of) the electronic device 201. For example, the input circuit 380 may include a touch pad, a touch panel, or buttons. The touch pad may recognize a touch input, based on at least one scheme among, for example, a capacitive scheme, a resistive scheme, an infrared scheme, and an ultrasonic scheme. When a capacitive touch pad is provided, physical contact or proximity recognition may be possible. The touch pad may further include a tactile layer. The touch pad including the tactile layer may provide tactile reaction to the user. The buttons may include, for example, physical buttons and/or optical keys. For example, the input circuit 380 may generate an input signal according to a user input and transfer the input signal to the processor 310. For example, the user input may be an input associated with functions of entering a call state, ending a call state, controlling a volume, and/or muting.

As described above, in an embodiment, the main elements of the electronic device have been described through the electronic device 201 of FIG. 3. However, in various embodiments, not all the elements illustrated in FIG. 3 are necessary, the electronic device 201 may be implemented by more elements than illustrated, and the electronic device 201 may be implemented by fewer elements than illustrated. Further, locations of the main elements of the electronic device 201 described through FIGS. 1 and 2 can be changed according to various embodiments.

FIG. 5 illustrates an example for identifying abnormal wearing of the electronic device according to an embodiment.

Referring to FIGS. 2B, 3, and 5, the processor 310 of the electronic device 201 according to an embodiment may acquire a signal level and a reception time of a first reception signal received by the inner mic 212 among the plurality of mics 211 and 212 of the first sound output device 210 or the inner mic 222 among the plurality of mics 221 and 222 of the second sound output device 220. The first reception signal may be an echo sound (for example, an echo signal) of a pilot signal output from the speaker 213 included in the first sound output device 210 or the speaker 223 included in the second sound output device 220. For example, as shown in FIG. 4, when the second sound output device 220 is normally worn on the right ear of the user's body (for example, the second location), the inner mic 222 may be hidden by a part 401 (for example, helix) of the right ear and may receive the echo sound (for example, the first reception signal) received from the speaker 223 at a signal level less than a reference signal level, and the speaker 223 is not hidden by the part 401 of the right ear and thus a time at which the echo sound is input into the inner mic 222 (for example, a time of the first reception signal) may be a relatively earlier time compared to abnormal wearing. Before the electronic device 201 is used (for example, when the product is implemented, the product is purchased, or an environment for the use is randomly set), the processor 310 may configure a reference signal level and/or a reference time by identifying the reception level and/or the reception time of the echo sound in abnormal wearing and the reception level and/or the reception time of the echo sound in normal wearing.

According to an embodiment, the processor 310 may identify that the user is normally wearing the first sound output device 210 and the second sound output device 220, based on the signal level of the first reception signal being less than the reference level or the time for the echo signal being earlier than the reference time. According to an embodiment, the processor 310 may identify that the user is abnormally wearing the first sound output device 210 and the second sound output device 220, based on the signal level of the first reception signal being greater than the reference level or the time for the echo sound being later than the reference time. According to an embodiment, the processor 310 may identify normal or abnormal wearing by comparing the signal level of the first reception signal and the reception time with the reference signal level and the reference reception time.

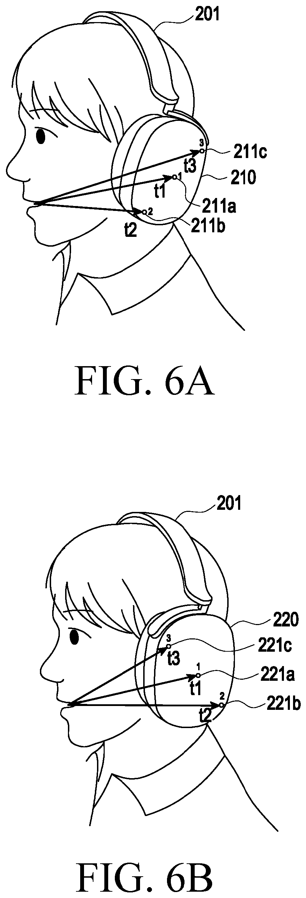

FIGS. 6A and 6B illustrate examples for identifying normal wearing of the electronic device according to an embodiment.

Referring to FIGS. 3, 6A, and 6B, when the number of first sound output devices 210 and second sound output devices 220 are plural, the processor 310 of the electronic device 201 according to an embodiment may compare reception signals (for example, second reception signals) received by the plurality of external mics 211a, 211b, and 211c included in the first sound output device 210 or reception signals (for example, second reception signals) received by the plurality of external mics 221a, 221b, and 221c included in the second sound output device 220 and identify whether the electronic device is normally or abnormally worn based on the size of signal strength (or the order of size) and/or the reception time (or the order of time) of arrival at the mics 221a, 221b, and 221c.

According to an embodiment, before the electronic device 201 is used, the processor 310 may configure the signal strength of the second external mic 211b arranged close to the first location of the user's body (for example, the left ear) to have a large value compared to the signal strength of the first external mic 211a during normal wearing, and the signal strength of the third external mic 211c arranged far from the first location of the user's body (for example, the left ear) to have a small value compared to the signal strength of the first external mic 211a during normal wearing. In normal wearing, the processor 310 may preconfigure the size of the signal strength and/or the reception time of second reception signals received by the plurality of external mics 211a, 211b, and 211c as reference values. Similar to the first sound output device 210, in normal wearing, the processor 310 may preconfigure the size of the signal strength and/or the reception time of second reception signals received by the plurality of external mics 221a, 221b, and 221c of the second sound output device 220 as reference values.

According to an embodiment, when a voice of the user (for example, speaker) is received by the plurality of external mics 211a, 211b, and 211c of the first sound output device 210 worn on the first location of the user's body (for example, the left ear), the processor 310 may receive the second reception signals through the plurality of external mics 211a, 211b, and 211c and acquire the signal strength of the second reception signals. The processor 310 may compare the signal strength of the second external mic 211b and the third external mic 211c, based on the signal strength of the first external mic 211a and identify the size order of the signal strength of the mics 211a, 211b, and 211c (for example, third mic < first mic < second mic). Through comparison with the preconfigured reference signal strengths, when the size order of the acquired signal strengths is the same (for example, third mic < first mic < second mic), the processor 310 may identify normal wearing. Through comparison with the preconfigured reference signal strengths, when the size order of the acquired signal strengths is different (for example, third mic > first mic > second mic), the processor 310 may identify abnormal wearing.

According to an embodiment, when a voice of the user (for example, speaker) is received by the plurality of external mics 221a, 221b, and 221c of the second sound output device 220 worn on the second location of the user's body (for example, the right ear), the processor 310 may compare the preconfigured reference signal strengths with the size order of the acquired signal strengths and identify normal wearing or abnormal wearing. According to an embodiment, when the processor 310 identifies whether one of the first sound output device 210 or the second sound output device 220 is normally or abnormally worn, the other sound output device may not perform an operation of identifying normal wearing or abnormal wearing but may receive result information identified by the one sound output device and identify the normal wearing or the abnormal wearing.

According to an embodiment, when a voice of the user (for example, a speaker) is received by the plurality of external mics 211a, 211b, and 211c of the first sound output device 210 worn on the first location of the user's body (for example, the left ear), the processor 310 may receive second reception signals through the plurality of external mics 211a, 211b, and 211c and acquire reception times (t1, t2, and t3) of the second reception signals. The processor 310 may compare the reception times t2 and t3 of the second external mic 211b and the third external mic 211c, based on the reception time (t1) of the first external mic 211a and identify the order of the reception times of the respective mics 211a, 211b, and 211c (for example, in the order of earlier time from the second mic reception time (t2), the first mic reception time (t1), and the third mic reception time (t3)). Through comparison with preconfigured reference reception times, when the order of the acquired reception times (t1, t2, and t3) is the same (for example, in the order of earlier time from the second mic reception time (t2), the first mic reception time (t1), and the third mic reception time (t3)), the processor 310 may identify normal wearing. Through comparison with preconfigured reference reception times, when the order of the acquired reception times (t1, t2, and t3) is different (for example, in the order of earlier time from the third mic reception time (t3), the first mic reception time (t1), and the second mic reception time (t2)), the processor 310 may identify abnormal wearing.

According to an embodiment, when a voice of the user (for example, speaker) is received by the plurality of external mics 221a, 221b, and 221c of the second sound output device 220 worn on the second location of the user's body (for example, the right ear), the processor 310 may compare the preconfigured reference reception times with the time order of the reception times of the acquired second reception signals and identify normal wearing or abnormal wearing. According to an embodiment, when the processor 310 identifies whether one of the first sound output device 210 or the second sound output device 220 is normally or abnormally worn, the other sound output device may not perform an operation of identifying normal wearing or abnormal wearing but may receive result information identified by the one sound output device and identify the normal wearing or the abnormal wearing.

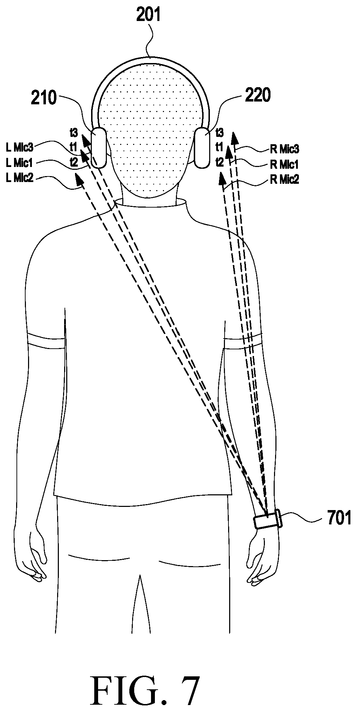

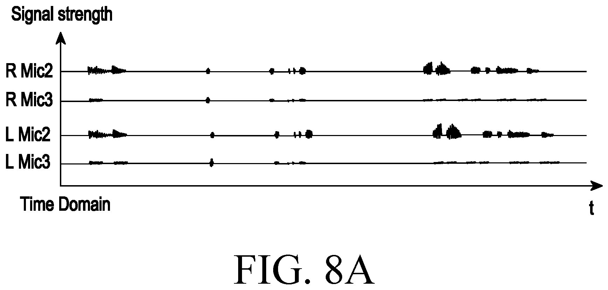

FIG. 7 illustrates an example for identifying normal wearing of the electronic device according to an embodiment, and FIGS. 8A to 8C are graphs illustrating reception signals received through a plurality of mics in the electronic device according to an embodiment.

Referring to FIGS. 3, 7, and 8A to 8C, the processor 310 of the electronic device 201 according to an embodiment may control the communication module 340 to communicate with an external wearable device 701. The processor 310 may acquire information related to a wearing location (for example, the left wrist) of the external wearable device 701 through the communication module 340. The processor 310 may acquire, as a third reception signal, an inaudible frequency signal (for example, ultrasonic wave) generated from the external wearable device 701, based on the wearing location identified according to the information related to the wearing location through one or more external mics 211a, 211b, or 211c among the plurality of mics of the first sound output device 210 and one or more external mics 221a, 221b, or 221c among the plurality of mics of the second sound output device 220.

According to an embodiment, the processor 310 may identify whether the first sound output device 210 and the second sound output device 220 are normally worn based on the wearing location and the acquired third reception signal. As illustrated in FIG. 8A, according to an embodiment, when the wearing location is the user's right wrist, the processor 310 may identify that the signal strength of the third reception signal of one or more mics (for example, a second mic (R Mic2) or a third mic (R MIc3)) of the second sound output device 220 worn on the right ear is greater than that of one or more mics (for example, a second mic (L Mic2) or a third mic (L Mic3)) of the first sound output device 210 worn on the left ear and the reception time (t) thereof is earlier during normal wearing, and may configure the signal strength and/or the reception time of the third reception signal received through one or more external mics 221a, 221b, or 221c of the second sound output device 220 as reference values during normal wearing. According to an embodiment, when the user is wearing the electronic device 201, the processor 310 may acquire the signal strength and/or the reception time of the third reception signal received through one or more mics 221a, 221b, or 221c of the second sound output device 220. According to an embodiment, when the wearing location of the external wearable device 701 is the user's left wrist and the electronic device 201 is normally worn, the processor 310 may configure the signal strength and/or the reception time of the third reception signal received through one or more external mics 211a, 211b, or 211c of the first sound output device 210 as reference values.

According to an embodiment, when the signal strength of the third reception signal is identified as a value less than the reference signal strength or a value equal to or less than a specified range, the processor 310 may identify that the first sound output device 210 and the second sound output device 220 are abnormally worn. According to an embodiment, when it is identified that the signal strength of the third reception signal is equal to or greater than the reference signal strength, the processor 310 may identify that the first sound output device 210 and the second sound output device 220 are normally worn. According to an embodiment, when the processor 310 identifies whether one of the first sound output device 210 or the second sound output device 220 is normally or abnormally worn, the other sound output device may not perform an operation of identifying normal wearing or abnormal wearing but may receive result information identified by the one sound output device and identify the normal wearing or the abnormal wearing.

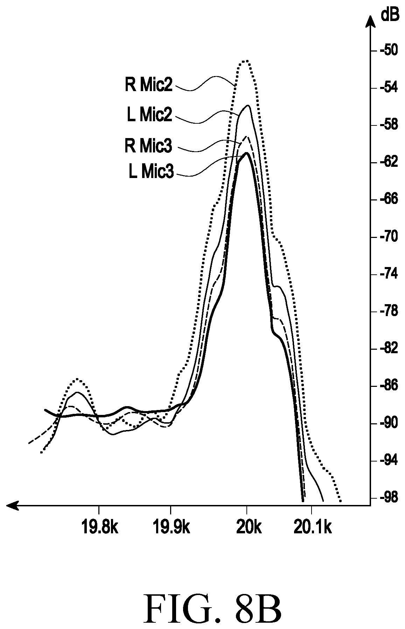

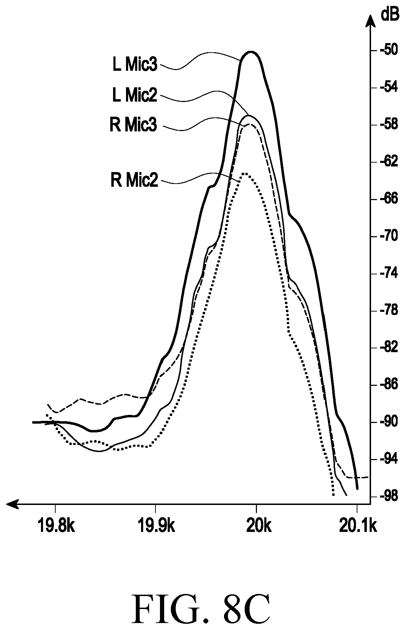

According to an embodiment, when normal wearing or abnormal wearing is identified through the second sound output device 220, if the signal strength of the third reception signal received by the second sound output device 220 is identified as a value greater than the reference signal strength or a value greater than or equal to the specified range as opposed to the first sound output device 210, the processor 310 may identify that the first sound output device 210 and the second sound output device 220 are abnormally worn. According to an embodiment, when the signal strength of the third reception signal received by the second sound output device 220 is identified as a value equal to or less than the reference signal strength as opposed to the first sound output device 210, the processor 310 may identify that the first sound output device 210 and the second sound output device 220 are normally worn. For example, when the external wearable device 701 reproduces an inaudible frequency (for example, 20 khz), the third reception signal received by each of one or more mics (for example, the second mic (L Mic2) or the third mic (L Mic3)) of the first sound output device 210 of the electronic device 201 and one or more mics (for example, the second mic (R Mic2) or the third mic (R Mic3)) of the second sound output device 220 may be indicated by frequency domain graphs (for example, L Mic2, L Mic3, R Mic2, and R Mic3) according to a time domain as illustrated in FIG. 8A. As shown in the graphs illustrated in FIG. 8B, the processor 310 may identify that the second mic (for example, the second mic (R Mic2) of the second sound output device 220 has the highest signal strength and identify that the second mic (for example, the second mic (R Mic2) is located in the same direction as the wearing location of the external wearable device 701, so as to identify the normal wearing. As shown in the graphs illustrated in FIG. 8C, the processor 310 may identify that the second mic (for example, the second mic (L Mic2) of the first sound output device 220 has the highest signal strength and identify that the second mic (for example, the second mic (L Mic2) is located in an opposite direction to the wearing location (for example, the right wrist) of the external wearable device 701, so as to identify the abnormal wearing. Although the third reception signal of the first mic is not illustrated in the graphs of FIGS. 8A to 8C, the third reception signal of the first mic may be a signal having a signal level of an intermediate value and a reception time of an intermediate value of the third reception signal of the second mic and the reception signal of the third mic.

According to an embodiment, when it is identified that the reception time (for example, t2, t1, or t3 of L in FIG. 7) of the third reception signal (for example, L Mic2, L Mic2, or L Mic3 in FIG. 7) is a value later than the specified reference reception time or a value equal to or later than the specified range, the processor 310 may identify that the first sound output device 210 and the second sound output device 220 are abnormally worn. According to an embodiment, when it is identified that the reception time (for example, t2, t1, or t3 of L in FIG. 7) of the third reception signal is earlier than or equal to the reference reception time, the processor 310 may identify that the first sound output device 210 and the second sound output device 220 are normally worn. According to an embodiment, when the processor 310 identifies whether one of the first sound output device 210 or the second sound output device 220 is normally or abnormally worn, the other sound output device may not perform an operation of identifying normal wearing or abnormal wearing but may receive result information identified by the one sound output device and identify the normal wearing or the abnormal wearing.

According to an embodiment, when normal wearing or abnormal wearing is identified through the second sound output device 220, if the signal strength of the third reception signal (for example, R Mic2, R Mic1, or R Mic3 of FIG. 7) received by the second sound output device 220 is identified as a value earlier than the reference reception time or a value earlier than or equal to the specified range opposed to the first sound output device 210, the processor 310 may identify that the first sound output device 210 and the second sound output device 220 are abnormally worn. According to an embodiment, when it is identified that the reception time (for example, t2, t1, or t3 of R in FIG. 7) of the third reception signal received by the second sound output device 220 is equal to or later than the reference reception time as opposed to the first sound output device 210, the processor 310 may identify that the first sound output device 210 and the second sound output device 220 are normally worn.

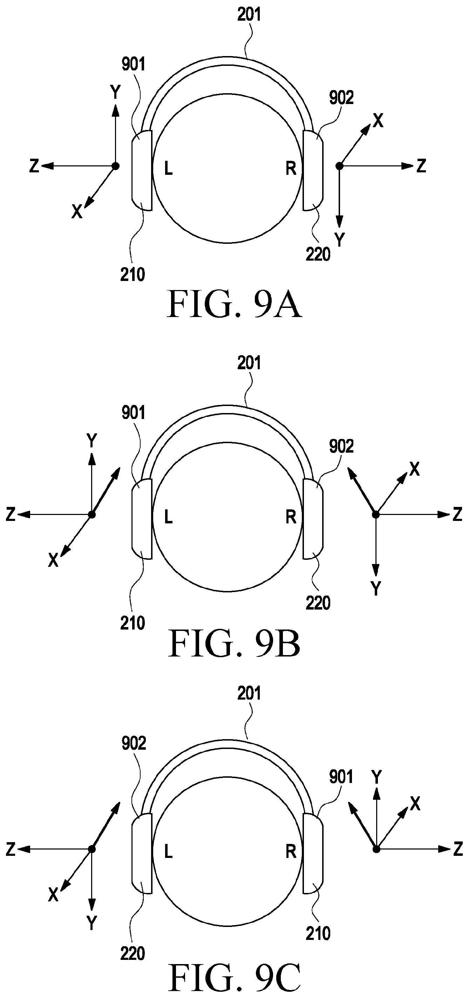

FIGS. 9A to 9C illustrate examples for identifying normal wearing of the electronic device according to an embodiment.

Referring to FIGS. 3 and 9A to 9C, the processor 310 of the electronic device 201 according to an embodiment may identify whether the first sound output device 210 and the second sound output device 220 are normally worn through a first acceleration sensor 901 and a second acceleration sensor 902 included in the sensor module 360. The first acceleration sensor 901 may be included in the first sound output device 210 and the second acceleration sensor 902 may be included in the second sound output device 220. The first acceleration sensor 901 and the second acceleration sensor 902 may be arranged in opposite directions to each other. For example, the first acceleration sensor 901 may be arranged inside the first sound output device 210 worn on the first location (for example, the left (L) ear) of the user's body such that an x axis is a negative direction, a y axis is a positive direction, and a z axis is a negative direction as illustrated in FIG. 9A. For example, the second acceleration sensor 902 may be arranged inside the second sound output device 220 worn on the second location (for example, the right (R) ear) of the user's body such that an x axis is a positive direction, a y axis is a negative direction, and a z axis is a positive direction as illustrated in FIG. 9A.

According to an embodiment, when the user wears the first sound output device 210 and the second sound output device 220, the processor 310 may identify a movement direction in which each of the first sound output device 210 and the second sound output device 220 moves through each axis (x, y, or z axis) of the first acceleration sensor 901 and the second acceleration sensor 902 and identify whether the first sound output device 210 and the second sound output device 220 are normally worn based on the identified movement direction. According to an embodiment, as illustrated in FIG. 9B, when it is identified that the movement direction of the x and y axes moves to the positive direction as the first acceleration sensor 901 moves in the positive direction and that the movement direction of the x and y axes move to the negative direction as the second acceleration sensor 902 moves in the negative direction, the processor 310 may identify that the first sound output device 210 and the second sound output device 220 are normally worn.

According to an embodiment, when the movement direction of at least one axis of the first acceleration sensor 901 and the second acceleration sensor 902 moves in a direction opposite to the arrangement direction, the processor 310 may identify that the first sound output device 210 and the second sound output device 220 are abnormally worn. According to an embodiment, when the movement direction of at least one axis of the first acceleration sensor 901 and the second acceleration sensor 902 moves in the same direction as the arrangement direction, the processor 310 may identify that the first sound output device 210 and the second sound output device 220 are normally worn. According to an embodiment, as illustrated in FIG. 9C, when it is identified that the movement direction of the x axis moves to the positive direction and the movement direction of the y axis moves to the positive direction as the first acceleration sensor 901 moves in the negative direction and that the movement direction of the x axis moves to the negative direction and the movement direction of the y axis moves to the negative direction as the second acceleration sensor 902 moves in the positive direction, the processor 310 may identify that the first sound output device 210 and the second sound output device 220 are abnormally worn.

According to an embodiment, when the user walks, the processor 310 may identify normal wearing or abnormal wearing based on a change in the movement direction of the x axis of each of the first acceleration sensor 901 and the second acceleration sensor 902. When the x axis of the first acceleration sensor 901 moves in the negative direction and the x axis of the second acceleration sensor 902 moves in the positive direction, the processor 310 may identify that the first sound output device 210 and the second sound output device 220 are normally worn. When the x axis of the first acceleration sensor 901 moves in the positive direction and the x axis of the second acceleration sensor 902 moves in the negative direction, the processor 310 may identify that the first sound output device 210 and the second sound output device 220 are abnormally worn.

According to an embodiment, an electronic device (for example, the electronic device 101 of FIG. 1 and the electronic device 201 of FIG. 2) may include a first sound output device (for example, the first sound output device 210 of FIGS. 2A, 2B, 3, 4, 5, 6A, 6B, 7, and 9A to 9C) including a plurality of mics (for example, the plurality of external mics 211 of FIG. 2A, the plurality of external mics 211a, 211b, and 211c of FIGS. 4, 6A, 6B, and 7, and the inner mic 212 of FIGS. 2B and 5) and configured to be wearable on a first location of a body, a second sound output device (for example, the second sound output device 220 of FIGS. 2A, 2B, 3, 4, 5, 7, and 9A to 9C) including a plurality of mics (for example, the plurality of external mics 221 of FIG. 2A, the plurality of external mics 221a, 221b, and 221c of FIGS. 4, 6A, 6B, and 7, and the inner mic 222 of FIGS. 2B and 5) configured to be wearable on a second location of the body, and at least one processor (for example, the processor 120 of FIG. 1 and the processor 310 of FIG. 3) electrically connected to the first sound output device and the second sound output device.

According to an embodiment, the at least one processor may identify whether the first sound output device and the second sound output device are normally worn, based on at least one reception signal received through at least one microphone among the plurality of microphones of the first sound output device or at least one microphone among the plurality of microphones of the second sound output device.

According to an embodiment, the at least one processor may be configured to induce re-wearing the first sound output device and the second sound output device in response to identification of abnormal wearing of the first sound output device and the second sound output device.

According to an embodiment, the first sound output device may further include a first speaker (for example, the first speaker 213 of FIG. 2B) and the second sound output device may further include a second speaker (for example, the first speaker 223 of FIG. 2B).

According to an embodiment, the at least one processor may be configured to control each of the first speaker and the second speaker to invert sound signals corresponding to the at least one reception signal and output the inverted sound signals in case that the abnormal wearing is maintained. According to an embodiment, the at least one processor may be configured to control the first speaker and the second speaker to output the sound signals corresponding to the reception signals in response to identification of normal wearing of the first sound output device and the second sound output device.

According to an embodiment, the at least one processor may be configured to acquire at least one of a signal level or a reception time of a first reception signal received by a first inner microphone among the plurality of microphones of the first sound output device or a second inner microphone among the plurality of microphones of the second sound output device. The first reception signal may be an echo sound of a pilot signal output from the first speaker or the second speaker.

According to an embodiment, the at least one processor may be configured to identify the normal wearing of the first sound output device and the second sound output device, based on the signal level being less than a reference signal level and the reception time for the echo sound being earlier than a reference reception time.

According to an embodiment, the at least one processor may be configured to identify the abnormal wearing of the first sound output device and the second sound output device, based on the signal level being greater than the reference signal level and the reception time for the echo sound being later than the reference reception time.

According to an embodiment, the at least one processor may be configured to acquire a signal strength of each of a plurality of reception signals received from the plurality of microphones of the first sound output device or the plurality of microphones of the second sound output device, identify the normal wearing in case that it is identified that a size order of signal strengths of the plurality of reception signals corresponds to a specified size order, and identify the abnormal wearing in case that it is identified that the size order of the signal strengths of the plurality of reception signals is different from the specified size order.

According to an embodiment, the at least one processor may be configured to acquire reception times of the reception signals received through the plurality of microphones of the first sound output device, identify the normal wearing in case that the reception time of each of the reception signals corresponds to a specified time order, and identify the abnormal wearing in case that the reception time of each of the reception signals is different from the specified time order.

According to an embodiment, the method may further include a communication module (for example, the communication module 190 of FIG. 1 or the communication module 340 of FIG. 3) configured to communicate with an external wearable device. According to an embodiment, the at least one processor may be configured to acquire information related to a wearing location of the external wearable device through the communication module, acquire an inaudible frequency signal generated from the external wearable device, based on the wearing location identified based on the information related to the wearing location, through one or more external microphones among the plurality of microphones, and identify the normal wearing, based on the wearing location and the inaudible frequency signal.

According to an embodiment, the at least one processor may be configured to acquire at least one of a signal strength or a reception time of the inaudible frequency signal input into the one or more external microphones of the first sound output device in case of the first location corresponding to the wearing location, identify the normal wearing in case that at least one of the signal strength or the reception time is greater than or equal to a reference value, and identify that the wearing location is in a direction opposite to the first location and identify the abnormal wearing of the first sound output device and the second sound output device in case that at least one of the signal strength or the reception time being less than the reference value.

According to an embodiment, the first sound output device may further include a first acceleration sensor (for example, the first acceleration sensor 901 of FIGS. 9A to 9C) and the second sound output device may further include a second acceleration sensor (for example, the second acceleration sensor 902 of FIGS. 9A to 9C), and the first acceleration sensor and the second acceleration sensor may be arranged in opposite directions to each other.

According to an embodiment, the at least one processor may be configured to identify whether the first sound output device and the second sound output device are normally worn, based on a movement direction of each axis of the first acceleration sensor and the second acceleration sensor in case that the first sound output device and the second sound output device are worn.

According to an embodiment, the at least one processor may be configured to identify abnormal wearing of the first sound output device and the second sound output device in case that movement directions of at least one axis of the first acceleration sensor and the second acceleration sensor moves in a direction opposite to an arrangement direction.

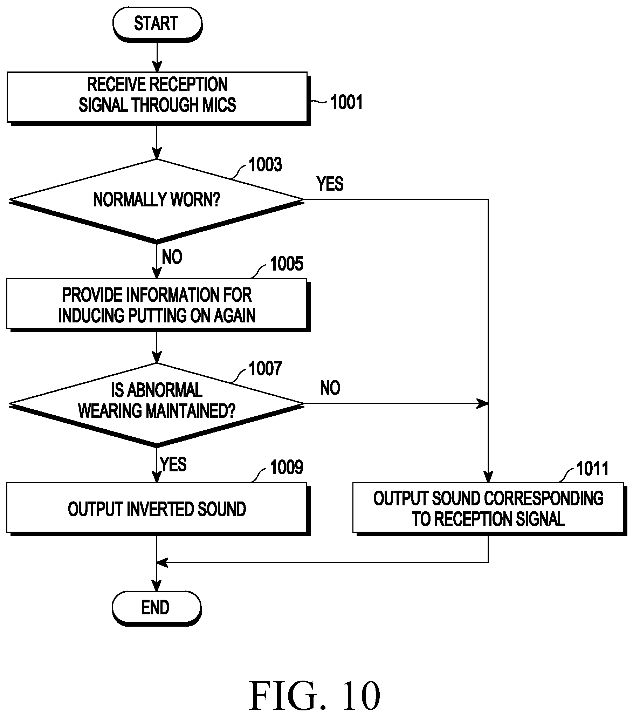

FIG. 10 is a flowchart illustrating a method of operating the electronic device according to an embodiment of the disclosure.

Referring to FIG. 10, an electronic device (for example, the electronic device 101 of FIG. 1 and the electronic device 201 of FIGS. 2A, 2B, and 3) according to an embodiment may include a first sound output device (for example, the first sound output device 210 of FIGS. 2A, 2B, 3, 4, 5, 6A, 6B, 7, and 9A to 9C) and a second sound output device (for example, the second sound output device 220of FIGS. 2A, 2B, 3, 4, 5, 6A, 6B, 7, and 9A to 9C) worn on a user's body part (for example, ears) and may receive at least one reception signal through at least one mic among a plurality of mics (for example, the plurality of external mics 211 of FIG. 2A, the plurality of external mics 211a, 211b, and 211c of FIGS. 4, 6A, 6B, and 7, and the inner mic 212 of FIG. 5) included in the first sound output device and at least one mic among a plurality of mics (for example, the plurality of external mics 221 of FIG. 2A, the plurality of external mics 221a, 221b, and 221c of FIGS, 4, 6A, 6B, and 7, and the inner mic 222 of FIG. 5) included in the second sound output device in operation 1001. According to an embodiment, the first sound output device may be configured to be wearable on a first location of the body (for example, left (L) ear) and the second sound output device may be configured to be wearable on a second location of the body (for example, right (R) ear). In the first sound output device, components (for example, at least one speaker and a plurality of mics) related to sound effects may be arranged to make the user feel a sense of space, based on a shape of the first location of the body and information indicating the first location of the body (for example, L indicating the left) may be imprinted in a partial area on the exterior of the housing. In the second sound output device, components related to sound effects may be arranged to make the user feel a sense of space, based on a shape of the second location of the body and information indicating the second location of the body (for example, R indicating the right) may be imprinted in a partial area on the exterior of the housing

In operation 1003, the electronic device may identify whether the first sound output device and the second sound output device are normally worn based on the reception signal. As a result, in the case of normal wearing, the electronic device may perform operation 1011, and in the case of abnormal wearing, the electronic device may perform operation 1005.

In operation 1005, the electronic device may induce re-wearing the first sound output device and the second sound output device in response to identification that the first sound output device and the second sound output device are abnormally worn. For example, the electronic device may transmit the information for inducing re-wearing to an external electronic device through wireless communication to display the information through a display of the external electronic device (for example, the external electronic device 102 or 104 of FIG. 1) carried by the user. For example, the electronic device may output the information for inducing re-wearing in the form of a voice signal through a first speaker or a second speaker or in the form of a light through a light emitting device (for example, a light emitting diode) formed in a partial area of the housing (for example, an area that the user can check).

In operation 1007, the electronic device may identify whether abnormal wearing is maintained after a specified time passes. As a result, when the abnormal wearing is maintained, the electronic device may perform operation 1009, and when the abnormal wearing is not maintained, the electronic device may perform operation 1011.

In operation 1009, in response to the identification that the abnormal wearing is maintained, the electronic device may invert a sound signal corresponding to reception signals and output the sound signal through the speaker (for example, the first speaker 213 and the second speaker 223 of FIG. 2B or the speaker 370 of FIG. 3).

In operation 1011, the electronic device may output the sound signal corresponding to reception signals through the speaker in response to the identification of normal wearing.

According to an embodiment, in operation 1003 of FIG. 10 described above, the electronic device may identify normal wearing of the first sound output device and the second sound output device, based on at least one reception signal (for example, the first reception signal) received from at least one of the first inner mic (for example, the first inner mic 213 of FIG. 2B) among the plurality of mics of the first sound output device or the second inner mic (for example, the second inner mic 222 of FIG. 2B) among the plurality of mics of the second sound output device. The electronic device may acquire a signal level and a reception time of the first reception signal. The first reception signal may be an echo sound (for example, an echo signal) of a pilot signal output from the first speaker included in the first sound output device or the second speaker included in the second sound output device. Before the electronic device 201 is used (for example, when the product is implemented, the product is purchased, or an environment for the use is randomly set), the electronic device may configure a reference signal level and/or a reference time by identifying the reception level and/or the reception time of the echo sound in abnormal wearing, and the reception level and/or the reception time of the echo sound in normal wearing. According to an embodiment, the electronic device may identify that the user is normally wearing the first sound output device 210 and the second sound output device 220, based on the signal level of the first reception signal being less than the reference level or the time for the echo signal being earlier than the reference time. According to an embodiment, the processor 310 may identify that the user is abnormally wearing the first sound output device 210 and the second sound output device 220, based on the signal level of the first reception signal being greater than the reference level or the time for the echo sound being later than the reference time.

According to an embodiment, in operation 1003 of FIG. 10 described above, the electronic device may identify normal wearing of the first sound output device and the second sound output device, based on one or more reception signals (for example, second reception signals) received from one or more external mics (for example, the external mics 211 of FIG. 2A) among the plurality of mics of the first sound output device or one or more external mics (for example, the external mics 221 of FIG. 2A) among the plurality of mics of the second sound output device. The electronic device may compare the second reception signals and identify normal wearing or abnormal wearing, based on sizes of the signal strength (or size order) and/or reception time (or time order) of arrival at respective mics (for example, the mics 221a, 221b, and 221c of FIGS. 4, 5A, and 5B).

According to an embodiment, when a voice of the user (for example, speaker) is received by the plurality of external mics of the first sound output device 210 worn on the first location of the user's body (for example, the left ear), the electronic device may receive second reception signals through the plurality of external mics and acquire the signal strength of the second reception signals. The electronic device 310 may compare the signal strength of the second external mic (the second mic 211b of FIGS. 4, 5A, and 5B) and the third external mic (the third mic 211c of FIGS. 4, 5A, and 5B), based on the signal strength of the first external mic (the first mic 211a of FIGS. 4, 5A, and 5B) and identify the size order of the signal strength of the mics (for example, third mic < first mic < second mic). Through comparison with the preconfigured reference signal strengths, when the size order of the acquired signal strengths is the same (for example, third mic < first mic < second mic), the electronic device may identify normal wearing. Through comparison with the preconfigured reference signal strengths, when the size order of the acquired signal strengths is different (for example, third mic > first mic > second mic), the electronic device may identify abnormal wearing. Although the operation for identifying normal wearing or abnormal wearing, based on the second reception signals received from the plurality of mics of the first sound output device has been described, the normal wearing or the abnormal wearing may be identified based on the size order of the signal strength of the second reception signals received from the plurality of mics of the second sound output device.

According to an embodiment, when a voice of the user (for example, speaker) is received by the plurality of external mics of the first sound output device worn on the first location of the user's body (for example, the left ear), the electronic device may receive second reception signals through the plurality of external mics and acquire the reception time of each of the second reception signals. The electronic device may compare the reception times of the second external mic and the third external mic, based on the reception time of the first external mic and identify the order of the reception times of the respective mics (for example, in the order of the earlier time from the second mic, the first mic, and the third mic). Through comparison with the preconfigured reference reception times, when the size order of the acquired reception times is the same (for example, in the order of the earlier time from the second mic, the first mic, and the third mic), the electronic device may identify normal wearing. Through comparison with the preconfigured reference signal strengths, when the size order of the acquired signal strengths is different (for example, in the order of the earlier time from the third mic, the first mic, and the second mic), the processor 310 may identify abnormal wearing Although the operation for identifying normal wearing or abnormal wearing, based on the second reception signals received from the plurality of mics of the first sound output device has been described, the normal wearing or the abnormal wearing may be identified based on the size order of the signal strength of the second reception signals received from the plurality of mics of the second sound output device.

According to an embodiment, in operation 1003 of FIG. 10 described above, the electronic device may identify normal wearing of the first sound output device and the second sound output device, based on inaudible frequencies (for example, the third reception signals) received from the external wearable device (for example, the external wearable device 701 of FIG. 7) through one or more external mics among the plurality of mics of the first sound output device and one or more external mics among the plurality of mics of the second sound output device and the wearing location of the external wearable device. When the user wears the first sound output device and the second sound output device, the electronic device may compare the signal strength and/or the reception time of the third reception signal with the reference signal strength and/or the reference reception time. When the signal strength of the third reception signal is identified as a value less than the reference signal strength or a value equal to or less than the specified range, the electronic device may identify that the first sound output device 210 and the second sound output device 220 are abnormally worn. According to an embodiment, when it is identified that the signal strength of the third reception signal is equal to or greater than the reference signal strength, the electronic device may identify that the first sound output device 210 and the second sound output device 220 are normally worn. According to an embodiment, when the processor 310 identifies whether one of the first sound output device 210 or the second sound output device 220 is normally or abnormally worn, the other sound output device may not perform an operation of identifying normal wearing or abnormal wearing but may receive result information identified by the one sound output device and identify the normal wearing or the abnormal wearing.

According to an embodiment, when the reception time (t1-L, t2-L, or t3-L) of the third reception signal is identified as a value later than the reference reception time or a value equal to or later than the specified range, the electronic device may identify that the first sound output device and the second sound output device are abnormally worn. According to an embodiment, when it is identified that the reception time (t1-L, t2-L, or t3-L) of the third reception signal is equal to or earlier than the reference reception time, the electronic device may identify that the first sound output device and the second sound output device are normally worn. According to an embodiment, when the electronic device identifies whether one of the first sound output device or the second sound output device is normally or abnormally worn, the other sound output device may not perform an operation of identifying normal wearing or abnormal wearing but may receive result information identified by the one sound output device and identify the normal wearing or the abnormal wearing.

According to an embodiment, in operation 1003 of FIG. 10 described above, the electronic device may identify whether the first sound output device and the second sound output device are normally worn or abnormally worn through a first acceleration sensor (for example, the first acceleration sensor 901 of FIGS. 9A to 9C) and a second acceleration sensor (for example, the second acceleration sensor 902 of FIGS. 9A to 9C) included in a sensor module (for example, the sensor module 360 of FIG. 3). The first acceleration sensor may be included in the first sound output device and the second acceleration sensor may be included in the second sound output device. The first acceleration sensor and the second sound output device may be arranged in opposite directions to each other.

According to an embodiment, when the user wears the first acceleration sensor and the second acceleration sensor, the electronic device may identify a movement direction in which each of the first sound output device and the second sound output device moves through each axis (x, y, or z axis) of the first acceleration sensor and the second acceleration sensor and identify whether the first acceleration sensor and the second acceleration sensor are normally worn based on the identified movement direction. According to an embodiment, when it is identified that the movement direction of x and y axes moves to a positive direction as the first acceleration sensor moves in the positive direction and that the movement direction of x and y axes moves to a negative direction as the second acceleration sensor moves in the negative direction, the electronic device may identify that the first sound output device and the second sound output device are normally worn.

According to an embodiment, when the movement direction of at least one axis of the first acceleration sensor and the second acceleration sensor moves to a direction opposite to the arrangement direction, the electronic device may identify that the first sound output device and the second sound output device are abnormally worn. According to an embodiment, when the movement direction of at least one axis of the first acceleration sensor and the second acceleration sensor moves to the same direction as the arrangement direction, the electronic device may identify that the first sound output device and the second sound output device are normally worn. According to an embodiment, when it is identified that the movement direction of the x axis moves to the positive direction and the movement direction of the y axis moves to the positive direction as the first acceleration sensor moves in the negative direction and that the movement direction of x axis moves to the negative direction and the movement direction of the y axis moves to the negative direction as the second acceleration sensor moves in the positive direction, the electronic device may identify that the first sound output device and the second sound output device are abnormally worn.

According to an embodiment, in operation 1003 of FIG. 10 described above, when the user walks, the electronic device may identify normal wearing or abnormal wearing based on a change in the movement direction of the x axis of each of the first acceleration sensor and the second acceleration sensor. According to an embodiment, when the x axis of the first acceleration sensor moves in the negative direction and the x axis of the second acceleration sensor moves in the positive direction, it may be identified that the first sound output device and the second sound output device are normally worn. According to an embodiment, when the x axis of the first acceleration sensor moves in the positive direction and the x axis of the second acceleration sensor moves in the negative direction, it may be identified that the first sound output device and the second sound output device are abnormally worn.

According to an embodiment, a method of operating an electronic device (for example, the electronic device 101 of FIG. 1 and the electronic device 201 of FIGS. 2A, 2B, and 3) may include receiving at least one reception signal through at least one microphone among a plurality of microphones (for example, the plurality of external mics 211 of FIG. 2A, the plurality of external mics 211a, 211b, and 211c of FIGS. 4, 6A, 6B, and 7, and the inner mic 212 of FIGS. 2B and 5) included in a first sound output device (for example, the first sound output device 210 of FIGS. 2A, 2B, 3, 4, 5, 6A, 6B, 7, and 9A to 9C) of the electronic device or at least one microphones among a plurality of microphones (for example, the plurality of external mics 221 of FIG. 2A, the plurality of external mics 221a, 221b, and 221c of FIGS. 4, 6A, 6B, and 7, and the inner mic 222 of FIGS. 2B and 5) included in a second sound output device (for example, the second sound output device 220 of FIGS. 2A, 2B, 3, 4, 5, 7, and 9A to 9C) of the electronic device.

According to an embodiment, the method of operating the electronic device may include identifying whether the first sound output device and the second sound output device are normally worn based on the at least one reception signal.

According to an embodiment, the method of operating the electronic device may include inducing re-wearing the first sound output device and the second sound output device in response to identification of abnormal wearing of the first sound output device and the second sound output device.

According to an embodiment, the method may further include inverting sound signals corresponding to the at least one reception signal and outputting the inverted sound signals through a first speaker (for example, the first speaker 213 of FIG. 2B) included in the first sound output device and a second speaker (for example, the second speaker 223 of FIG. 2B) included in the second sound output device in case that the abnormal wearing is maintained.

According to an embodiment, the method may further include outputting the sound signals corresponding to the reception signals through the first speaker and the second speaker in response to identification of normal wearing of the first sound output device and the second sound output device.

According to an embodiment, the operation of identifying whether the first sound output device and the second sound output device are normally worn based on the at least one reception signal may include acquiring at least one of a signal level or a reception time of a first reception signal received by a first inner microphone among the plurality of microphones of the first sound output device or a second inner microphone among the plurality of microphones of the second sound output device. The first reception signal may be an echo sound of a pilot signal output from the first speaker or the second speaker.

According to an embodiment, the operation of identifying whether the first sound output device and the second sound output device are normally worn based on the at least one reception signal may include identifying the normal wearing of the first sound output device and the second sound output device, based on the signal level being less than a reference signal level and the reception time for the echo sound being earlier than a reference reception time.

According to an embodiment, the operation of identifying whether the first sound output device and the second sound output device are normally worn based on the at least one reception signal may include identifying the abnormal wearing of the first sound output device and the second sound output device, based on the signal level being greater than the reference signal level and the reception time for the echo sound being later than the reference reception time.

According to an embodiment, the operation of identifying whether the first sound output device and the second sound output device are normally worn based on the at least one reception signal may include acquiring a signal strength of each of a plurality of reception signals received from the plurality of microphones of the first sound output device or the plurality of microphones of the second sound output device, identifying the normal wearing in case that it is identified that a size order of signal strengths of the plurality of reception signals corresponds to a specified size order, and identifying the abnormal wearing of the first sound output device and the second sound output device in case that it is identified that the size order of the signal strengths of the plurality of reception signals is different from the specified size order.

According to an embodiment, the operation of identifying whether the first sound output device and the second sound output device are normally worn based on the at least one reception signal may include acquiring reception times of the reception signals received through the plurality of microphones of the first sound output device identifying the normal wearing in case that the reception time of each of the reception signals corresponds to a specified time order, and identifying the abnormal wearing of the first sound output device and the second sound output device in case that the reception time of each of the reception signals is different from the specified time order.

According to an embodiment, the operation of identifying whether the first sound output device and the second sound output device are normally worn based on the at least one reception signal may include acquiring information related to a wearing location of an external wearable device through a communication module of the electronic device, acquiring an inaudible frequency signal generated from the external wearable device, based on the wearing location identified based on the information related to the wearing location, through one or more external microphones among the plurality of microphones, and identifying the normal wearing, based on the wearing location and the inaudible frequency signal.

According to an embodiment, the operation of identifying whether the first sound output device and the second sound output device are normally worn based on the at least one reception signal may include acquiring at least one of a signal strength or a reception time of the inaudible frequency signal input into the one or more external microphones of the first sound output device in case of a first location corresponding to the wearing location, identifying the normal wearing in case that at least one of the signal strength or the reception time is greater than or equal to a reference value, and identifying that the wearing location is in a direction opposite to the first location and identifying the abnormal wearing of the first sound output device and the second sound output device in case that at least one of the signal strength or the reception time is less than the reference value.

According to an embodiment, the operation of identifying whether the first sound output device and the second sound output device are normally worn based on the at least one reception signal may further include identifying whether the first sound output device and the second sound output device are normally worn, based on a movement direction of each axis of a first acceleration sensor (for example, the first acceleration sensor 901 of FIGS. 9A to 9C) included in the first sound output device and a second acceleration sensor (for example, the second acceleration sensor 902 of FIGS. 9A to 9C) included in the second sound output device in case that the first sound output device and the second sound output device are worn. The first acceleration sensor and the second acceleration sensor may be arranged in opposite directions to each other.

According to an embodiment, the operation of identifying whether the first sound output device and the second sound output device are normally worn based on the at least one reception signal may further include identifying the abnormal wearing of the first sound output device and the second sound output device in case that movement directions of at least one axis of the first acceleration sensor and the second acceleration sensor moves in a direction opposite to an arrangement direction.

According to an embodiment, a non-transitory storage medium storing a program is provided. The program may include instructions that, when executed by a processor (for example, the processor 120 of FIG. 1 and the processor 310 of FIG. 3) of an electronic device (for example, the electronic device 101 of FIG. 1 and the electronic device 201 of FIGS. 2A, 2B, and 3), cause the electronic device to receive at least one reception signal through at least one microphone among a plurality of microphones (for example, the plurality of external mics 211 of FIG. 2A, the plurality of external mics 211a, 211b, and 211c of FIGS. 4, 6A, 6B, and 7, and the inner mic 212 of FIGS. 2B and 5) included in a first sound output device (for example, the first sound output device 210 of FIGS. 2A, 2B, 3, 4, 5, 6A, 6B, 7, and 9A to 9C) of the electronic device or at least one microphones among a plurality of microphones (for example, the plurality of external mics 221 of FIG. 2A, the plurality of external mics 221a, 221b, and 221c of FIGS. 4, 6A, 6B, and 7, and the inner mic 222 of FIGS. 2B and 5) included in a second sound output device (for example, the second sound output device 220 of FIGS. 2A, 2B, 3, 4, 5, 7, and 9A to 9C) of the electronic device, identify whether the first sound output device and the second sound output device are normally worn based on the at least one reception signal, and induce re-wearing the first sound output device and the second sound output device in response to identification of abnormal wearing of the first sound output device and the second sound output device.

According to an embodiment, the electronic device may identify left and right abnormal wearing (miswearing) of the first sound output device and the second sound output device, inform the user that sound output devices are abnormally worn, and induce re-wearing or automatically invert a sound signal and output the inverted sound signal, so as to correctly deliver stereo sound effects and accordingly provide an accurate sense of space and sound effects during watching of media. In addition, various effects directly or indirectly detected through the document can be provided.

Embodiments disclosed in this document are presented for explanation and understanding of the disclosed technology, and do not limit the scope of the technology disclosed in the document. Accordingly, the scope of this document should be construed to include all modifications based on the technical idea of the document or various other embodiments.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 or 201) comprising:
a first sound output device (210) comprising a plurality of microphones (211 and 212) and configured to be wearable on a first location of a body;
a second sound output device (220) comprising a plurality of microphones (221 and 222) and configured to be wearable on a second location of the body; and
at least one processor (120 and 310) electrically connected to the first sound output device and the second sound output device,
wherein the at least one processor is configured to:
identify whether the first sound output device and the second sound output device are normally worn, based on at least one reception signal received through at least one microphone among the plurality of microphones of the first sound output device or at least one microphone among the plurality of microphones of the second sound output device; and
induce re-wearing the first sound output device and the second sound output device in response to identification of abnormal wearing of the first sound output device and the second sound output device.

2. The electronic device of claim 1, wherein the first sound output device further comprises a first speaker (213),
wherein the second sound output device further comprises a second speaker (223), and
wherein the at least one processor is configured to:
control each of the first speaker and the second speaker to invert sound signals corresponding to the at least one reception signal and output the inverted sound signals in case that the abnormal wearing is maintained; and
control the first speaker and the second speaker to output sound signals corresponding to the reception signals in response to identification of normal wearing of the first sound output device and the second sound output device.

3. The electronic device of claim 1 or 2, wherein the at least one processor is configured to:
acquire at least one of a signal level or a reception time of a first reception signal received by a first inner microphone among the plurality of microphones of the first sound output device or a second inner microphone among the plurality of microphones of the second sound output device, wherein the first reception signal is an echo sound of a pilot signal output from the first speaker or the second speaker;
identify the normal wearing of the first sound output device and the second sound output device, based on the signal level being less than a reference signal level and the reception time for the echo sound being earlier than a reference reception time; and
identify the abnormal wearing of the first sound output device and the second sound output device, based on the signal level being greater than the reference signal level and the reception time for the echo sound being later than the reference reception time.

4. The electronic device of one of claims 1 to 3, wherein the at least one processor is configured to:
acquire a signal strength of each of a plurality of reception signals received from the plurality of microphones of the first sound output device or the plurality of microphones of the second sound output device;
identify the normal wearing in case that it is identified that a size order of signal strengths of the plurality of reception signals corresponds to thespecified size order; and
identify the abnormal wearing in case that it is identified that the size order of the signal strengths of the plurality of reception signals is different from the specified size order.

5. The electronic device of one of claims 1 to 4, wherein the at least one processor is configured to:
acquire reception times of the reception signals received through the plurality of microphones of the first sound output device;
identify the normal wearing in case that the reception time of each of the reception signals corresponds to a specified time order; and
identify the abnormal wearing in case that the reception time of each of the reception signals is different from the specified time order.

6. The electronic device of one of claims 1 to 5, further comprising a communication module configured to communicate with an external wearable device,
wherein the at least one processor is configured to:
acquire information related to a wearing location of the external wearable device through the communication module;
based on the wearing location identified based on the information related to the wearing location, acquire an inaudible frequency signal generated from the external wearable device through one or more external microphones among the plurality of microphones;
acquire at least one of a signal strength or a reception time of the inaudible frequency signal input into the one or more external microphones of the first sound output device in case of the first location corresponding to the wearing location;
identify the normal wearing in case that at least one of the signal strength or the reception time is greater than or equal to a reference value; and
identify that the wearing location is in a direction opposite to the first location and identify the abnormal wearing of the first sound output device and the second sound output device in case that at least one of the signal strength or the reception time being less than the reference value.

7. The electronic device of one of claims 1 to 6, wherein the first sound output device further comprises a first acceleration sensor,
wherein the second sound output device further comprises a second sound output device,
wherein the first acceleration sensor and the second acceleration sensor are arranged in opposite directions to each other, and
wherein the at least one processor is configured to:
identify whether the first sound output device and the second sound output device are normally worn, based on a movement direction of each axis of the first acceleration sensor and the second acceleration sensor during wearing of the first sound output device and the second sound output device; and
identify abnormal wearing of the first sound output device and the second sound output device in case that movement directions of at least one axis of the first acceleration sensor and the second acceleration sensor moves in a direction opposite to an arrangement direction.

8. A method of operating an electronic device (101 or 201), the method comprising:
receiving at least one reception signal through at least one microphone among a plurality of microphones (211 and 212) included in a first sound output device (210) of the electronic device or at least one microphones among a plurality of microphones (221 and 222) included in a second sound output device (220) of the electronic device;
identifying whether the first sound output device and the second sound output device are normally worn based on the at least one reception signal; and
inducing re-wearing the first sound output device and the second sound output device in response to identification of abnormal wearing of the first sound output device and the second sound output device.

9. The method of claim 8, further comprising:
inverting sound signals corresponding to the at least one reception signal and outputting the inverted sound signals through a first speaker (213) included in the first sound output device and a second speaker (223) included in the second sound output device in case that the abnormal wearing is maintained; and
outputting the sound signals corresponding to the reception signals through the first speaker and the second speaker in response to identification of normal wearing of the first sound output device and the second sound output device.

10. The method of one of claim 8 or 9, wherein the identifying of whether the first sound output device and the second sound output device are normally worn based on the at least one reception signal comprises:
acquiring at least one of a signal level or a reception time of a first reception signal received by a first inner microphone among the plurality of microphones of the first sound output device or a second inner microphone among the plurality of microphones of the second sound output device, wherein the first reception signal is an echo sound of a pilot signal output from the first speaker or the second speaker;
identifying the normal wearing of the first sound output device and the second sound output device, based on the signal level being less than a reference signal level and the reception time for the echo sound being earlier than a reference reception time; and
identifying the abnormal wearing of the first sound output device and the second sound output device, based on the signal level being greater than the reference signal level and the reception time for the echo sound being later than the reference reception time.

11. The method of one of claims 8 to 10, wherein the identifying of whether the first sound output device and the second sound output device are normally worn based on the at least one reception signal comprises:
acquiring a signal strength of each of a plurality of reception signals received from the plurality of microphones of the first sound output device or the plurality of microphones of the second sound output device;
identifying the normal wearing in case that it is identified that a size order of signal strengths of the plurality of reception signals corresponds to a specified size order; and
identifying the abnormal wearing of the first sound output device and the second sound output device in case that it is identified that the size order of the signal strengths of the plurality of reception signals is different from the specified size order.

12. The method of one of claims 8 to 11, wherein the identifying of whether the first sound output device and the second sound output device are normally worn based on the at least one reception signal comprises:
acquiring reception times of the reception signals received through the plurality of microphones of the first sound output device;
identifying the normal wearing in case that the reception time of each of the reception signals corresponds to the specified time order; and
identifying the abnormal wearing of the first sound output device and the second sound output device in case that the reception time of each of the reception signals is different from the specified time order.

13. The method of one of claims 8 to 12, wherein the identifying of whether the first sound output device and the second sound output device are normally worn based on the at least one reception signal comprises:
acquiring information related to a wearing location of an external wearable device through a communication module of the electronic device;
acquiring an inaudible frequency signal generated from the external wearable device, based on the wearing location identified based on the information related to the wearing location, through one or more external microphones among the plurality of microphones;
acquiring at least one of a signal strength or a reception time of the inaudible frequency signal input into the one or more external microphones of the first sound output device in case of a first location corresponding to the wearing location;
identifying the normal wearing in case that at least one of the signal strength or the reception time is greater than or equal to a reference value; and
identifying that the wearing location is in a direction opposite to the first location and identifying the abnormal wearing of the first sound output device and the second sound output device in case that at least one of the signal strength or the reception time being less than the reference value.

14. The method of one of claims 8 to 13, wherein the identifying of whether the first sound output device and the second sound output device are normally worn based on the at least one reception signal comprises:
identifying whether the first sound output device and the second sound output device are normally worn, based on a movement direction of each axis of a first acceleration sensor included in the first sound output device and a second acceleration sensor included in the second sound output device in case that the first sound output device and the second sound output device are worn; and
identifying the abnormal wearing of the first sound output device and the second sound output device in case that movement directions of at least one axis of the first acceleration sensor and the second acceleration sensor moves in a direction opposite to an arrangement direction, and
wherein the first acceleration sensor and the second acceleration sensor are arranged in opposite directions to each other.

15. A non-transitory storage medium storing a program, the program comprising instructions that, when executed by a processor of an electronic device, cause the electronic device to:
receive at least one reception signal through at least one microphone among a plurality of microphones included in a first sound output device of the electronic device or at least one microphones among a plurality of microphones included in a second sound output device of the electronic device;
identify whether the first sound output device and the second sound output device are normally worn based on the at least one reception signal; and
inducere-wearing the first sound output device and the second sound output device in response to identification of abnormal wearing of the first sound output device and the second sound output device.
